(19) Europäisches Patentamt
European Patent Office
Office européen des brevets

(11) **EP 3 333 557 B1**

(12) **EUROPÄISCHE PATENTSCHRIFT**

(45) Veröffentlichungstag und Bekanntmachung des Hinweises auf die Patenterteilung:
**23.02.2022  Patentblatt 2022/08**

(21) Anmeldenummer: **17201803.8**

(22) Anmeldetag: **15.11.2017**

(51) Internationale Patentklassifikation (IPC):
*G01J 5/00* (2022.01)    *G01J 5/08* (2022.01)
*G01J 5/02* (2022.01)    *G01J 5/06* (2022.01)
*G01S 3/00* (2006.01)    *G01J 5/60* (2006.01)
*G01S 7/495* (2006.01)    *G06K 9/68* (2006.01)
*F41H 11/02* (2006.01)    *F41G 7/22* (2006.01)
*G01S 3/784* (2006.01)    *G06K 9/00* (2022.01)

(52) Gemeinsame Patentklassifikation (CPC):
**G01J 5/0806; F41H 11/02; G01J 5/0014;**
**G01J 5/025; G01J 5/06; G01J 5/07; G01J 5/0802;**
**G01J 5/0846; G01J 5/60; G01S 3/784;**
**G01S 7/495;** F41G 7/224; G01J 2005/065;
G01J 2005/066; G06K 9/00496

(54) **INFRAROT-OPTISCHES SYSTEM ZUR RAKETENWARNUNG SOWIE VERFAHREN ZUM EINSATZ EINES SOLCHEN SYSTEMS**

INFRA-RED OPTICAL SYSTEM FOR MISSILE WARNING AND METHOD FOR USE OF SUCH A SYSTEM

SYSTÈME D'ALERTE MISSILE À INFRAROUGE OPTIQUE AINSI QUE PROCÉDÉ D'UTILISATION D'UN TEL SYSTÈME

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.11.2016  DE 102016013960**

(43) Veröffentlichungstag der Anmeldung:
**13.06.2018  Patentblatt 2018/24**

(73) Patentinhaber: **HENSOLDT Sensors GmbH**
**82024 Taufkirchen (DE)**

(72) Erfinder: **Barth, Jochen**
**85764 Oberschleißheim (DE)**

(74) Vertreter: **LifeTech IP**
**Spies & Behrndt Patentanwälte PartG mbB**
**Elsenheimerstraße 47a**
**80687 München (DE)**

(56) Entgegenhaltungen:
**EP-A2- 0 899 585        US-A- 2 961 545**
**US-A1- 2011 084 195    US-B2- 8 184 272**

**Beschreibung**

Die Erfindung betrifft ein IR-optisches System zur Raketenwarnung nach dem Oberbegriff des Anspruchs 1.

infrarot-Warnsensoren detektieren anfliegende Raketen über die Signatur der heißen Abgaswolke: Kennzeichen ist die IR-Emission heißer CO2-Moleküle in einer spektral eng begrenzten Bande um 4,4 $\mu$m. Die damit verbundenen Probleme sind:

(1) geringe Detektions-Sicherheit wegen starkem Hintergrund-Clutter;

(2) Erhöhte Falschalarme (z.B. Detektor-Artefakte oder Sonnenreflexe).

In US 2011/0084195 A1 und US 8,184,272 B2 sind bekannte Warnsysteme offenbart, die ankommende Raketen erfassen können und entsprechende Gegenmaßnahmen ermöglichen.

Optische Raketen-Warnsensoren sollen ein großes Bildfeld abdecken, was eine kurze Brennweite bedingt. Um Punktziele wie Raketensignaturen zu entdecken, muss die Eintrittspupille des Warnsensors möglichst groß gewählt werden, was bei kurzer Brennweite nur mit kleiner F-Zahl (Verhältnis von Brennweite zu Pupillen-Durchmesser) möglich ist. Dies führt zu starker Hintergrundstrahlung im Warnsensor, so dass das Problem zu lösen ist, die Signatur der Rakete im Hintergrund-Clutter mit hoher Wahrscheinlichkeit und geringer Falschalarmrate zu detektieren.

Dieses Problem wird mit dem IR-optischen System nach Anspruch 1 überwunden. Vorteilhafte Ausführungen sowie ein Verfahren zur Detektion von Raketen unter Einsatz des erfindungsgemäßen IR-optischen Systems sind Gegenstand von weiteren Ansprüchen.

Gemäß der Erfindung wird neben dem IR-Warnsensor (im Folgenden kurz Warnsensor genannt) ein zweiter IR-Sensor (im Folgenden Confirmation Sensor genannt) vorgeschlagen, der vom Warnsensor eingewiesen werden kann und die Aufgabe hat, das vom Warnsensor detektierte Ziel weiter zu analysieren um die Zuverlässigkeit einer Detektion weiter zu erhöhen. Es erfolgt also eine Aufteilung in eine Detektionsfunktion durch den Warnsensor und eine Verifizierungsfunktion mittels des Confirmation-Sensors. Die Eigenschaften dieser beiden Sensoren können im Hinblick auf deren jeweiligen Funktion optimiert werden.

Der Confirmation-Sensor ist derart ausgestattet, dass er - im Vergleich zum Warnsensor - mit großer F-Zahl und hoher Brennweite die Signatur vor reduziertem Hintergrund spektral prüfen kann. Durch die größere Brennweite wird das Bild räumlich ausgedehnter Objekte vergrößert und die von diesen Objekten aufgenommene Strahlungsleistung auf eine größere Bildfläche, also auch mehr Pixel des Detektors, aufgeteilt. Wenn es sich dagegen bei dem vom Warnsensor detektierten Objekt um eine Punktquelle handelt (dies ist eine notwendige Voraussetzung für eine Raketensignatur in operationell relevanter Entfernung), bleibt das Bild dieser Punktquelle im Confirmation-Sensor räumlich ähnliche scharf begrenzt wie im IR-Warnsensor.

Um die spektrale Charakteristik der Raketensignatur zu erfassen, ist der Warnsensor mit einem Bandpassfilter ausgestattet, das auf den Spektralbereich der IR-Signatur um 4,4 $\mu$m ausgelegt ist. Die geringe F-Zahl des Warnsensors setzt der Optimierung des Bandpassfilters jedoch enge Grenzen in Bezug auf die Steilheit der Flanken und die Halbwertsbreite des Transmissionsbereichs, da der Filter in der Optik von Strahlen durchsetzt wird, die einen großen Winkelbereich überdecken.

Vorteilhaft wird daher der Confirmation Sensor nicht mit einer möglichst großen Pupille und entsprechend geringer F-Zahl ausgelegt, wie es eine Optimierung der Empfindlichkeit gegenüber Punktquellen geringer Intensität nahelegen würde, sondern man wählt die Größe der Eintrittspupille des Confirmation- Sensors im Wesentlichen gleich als die des Warnsensors. Da der Confirmation-Sensor der Überprüfung von Punktzielen dient, die der Warnsensor bereits detektiert hat, ist diese Auslegung der Pupillengröße ausreichend für die Empfindlichkeit des Confirmation-Sensors, aber wegen der resultierenden großen F-Zahl ist die Intensität des Hintergrunds im Vergleich zum IR-Warnsensor deutlich reduziert, so dass sich das Ziel klar abzeichnet und aufgefasst werden kann.

Der Vorteil dieser Auslegung besteht darin, dass die große F-Zahl die Verwendung eines schmalbandigeren Filters mit steilen Kanten erlaubt. Dadurch wird der Signalzu-Hintergrund Kontrast im Confirmation-Sensor vergrößert für Objekte, deren spektrale Signatur dem des Abgasstrahls einer Rakete bei 4,4 $\mu$m entspricht.

Aus der erfindungsgemäßen Kombination eines solchen Confirmation-Sensors mit einem weitwinkligen IR-Warnsensor lässt sich durch Vergleich der Kontrastwerte, mit der ein Punktziel auf dem jeweiligen Detektor abgebildet wird, schnell und zuverlässig ableiten, ob die detektierte Objektsignatur derjenigen einer spektral schmalbandigen Punktquelle entspricht; dies ist hinreichendes Kriterium für eine Raketensignatur.

Die Optik des Confirmation-Sensors umfasst ein Bandpassfilter, dessen Transmissionsbereich wesentlich schmalbandiger ist als derjenige des IR-Warnsensors, insbesondere im Verhältnis kleiner als 0,2. Vorteilhaft ist z.B. ein Transmissionsbereich des Filters mit einer Breite von 50nm für den Confirmation-Sensor, während die entsprechende Breite beim IR-Warnsensor z.B. 0,5 $\mu$m beträgt. Der Transmissionsbereich sollte passend zum spektralen Maximum der Raketensignatur gewählt werden, das durch die Charakteristik der Emission des heißen $CO_2$ im Abgasstrahl und

der Absorption durch kaltes $CO_2$ beim Durchgang durch die Atmosphäre entsteht. Idealerweise kann der Transmissionsbereich des Bandpassfilters des Confirmation-Sensors variiert werden, so dass die Intensität des spektralen Maximums zuverlässig gemessen wird. Diese Variation kann erreicht werden zum Beispiel durch Verkippen des Filters, durch Verwendung eines spektralen Verlaufsfilters oder durch Verwendung eines elektrisch durchstimmbaren Fabry-Perot Filters. Mit einem solchen durchstimmbaren Filter kann das relevante Spektrum zwischen 4,4 und 4,8 μm oder 4,5 bis 4,6 μm fortlaufend abgetastet werden.

Wegen der großen Brennweite erfasst der Confirmation-Sensor nur ein kleines Sichtfeld, so dass die Sichtlinie des Confirmation-Sensors über Richtspiegel sowie zugehörige Antriebe vorteilhaft in zwei Achsen ausgerichtet wird.

Mit dem erfindungsgemäßen System aus IR-Warnsensor und Confirmation-Sensor ergibt sich ein Ablauf zur zuverlässigen und bestätigten Detektion von Raketen wie folgt:

- Detektion eines Ziels im IR-Warnsensor,
- Einweisung des Confirmation-Sensors auf das vom IR-Warnsensor detektierte Ziel,
- Ausrichtung des Confirmation-Sensors auf das vom IR-Warnsensor detektierte Ziel,
- Detektion des Ziels durch den Confirmation-Sensor,
- Bestätigung der Raketensignatur durch Auswertung der Kontrastwerte des Ziels im IR-Warnsensor und im Confirmation-Sensor.

Die Kombination aus IR-Warnsensor und IR-Confirmation-Sensor bietet den Vorteil einer einfachen Einweisung (Übergabe des detektierten Ziels), da beide Sensoren gleiche Signaturen messen. Weitere Vorteile der Erfindung sind:

1) Unterscheidbarkeit von Raketensignaturen und Falschzielen wird ermöglicht,

2) Reduzierung der Falschalarme durch Unterdrückung der Hintergrundstrahlung im Confirmation-Sensor, so dass Raketen-Signaturen klar erkennbar werden,

3) Reduzierung der Falschalarme durch Ausschluss elektronischer Artefakte.

Im Folgenden wird die Erfindung anhand von Figuren näher erläutert. Es zeigen:

Fig. 1 die spektrale Charakteristik der Emission von $CO_2$-Molekülen mit einer Temperatur von 1500 K, dargestellt für 3 unterschiedliche Entfernungen d von 1 km, 3 km und 10 km;

Fig. 2 die spektrale Charakteristik von Schwarzkörperstrahlung für Hintergrundstrahlung bei 0°C, 20°C und 50°C Temperatur sowie für Sonnenstrahlung (6000K);

Fig. 3 zeigt ein Beispiel für die optische Auslegung eines erfindungsgemäßen Confirmation-Sensors,

Fig. 4 zeigt das Punktbild eines detektierten Ziels mit lokaler Umgebung auf einem Array-Detektor, links für einen Warnsensors und rechts für einen Confirmation-Sensor. Der Grad der Graufüllung der einzelnen Pixel symbolisiert die Intensität der auf jedem Pixel einfallenden Strahlungsenergie.

Fig. 5 zeigt den Zusammenhang der Kontrastwerte $K_{MWS}$, $K_{CS}$ im Warnsensor bzw. Confirmation-Sensor für eine schmalbandige Punktquelle (durchgezogene Linie) und für eine breitbandige Punktquelle (gestrichelte Linie). Die schmalbandige Punktquelle entspricht der zu detektierenden Raketensignatur.

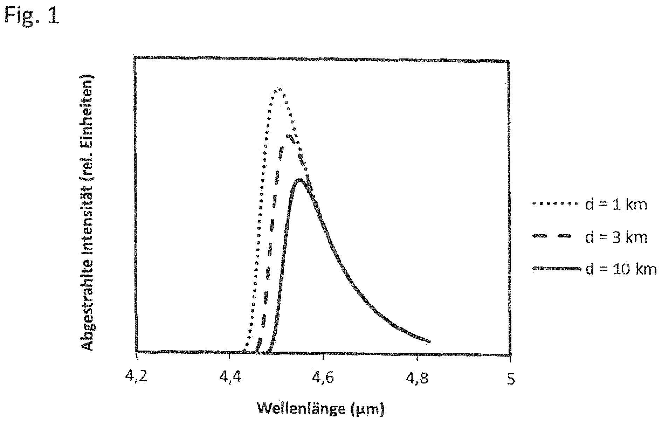

Fig. 1 zeigt die spektrale Charakteristik der Emission von $CO_2$-Molekülen, wie sie im Abgas der zu detektierenden Raketen vorhanden sind. Aufgrund der Absorption durch atmosphärisches $CO_2$ wird die empfangene Strahlung zu kurzen Wellenlängen hin begrenzt. Dieser Effekt ist entfernungsabhängig. Entsprechend ist die Strahlungscharakteristik in Fig. 1 für drei verschiedene Entfernungen des Beobachters dargestellt, berechnet für eine Temperatur des atmosphärischen $CO_2$ von 20°C (die Reduktion der Strahlungsdichte durch das quadratische Abstandsgesetz ist in der Fig. 1 aus Übersichtsgründen nicht eingerechnet). Man erkennt, dass die empfangene Strahlung nur in einem spektral eng begrenzten Band im mittleren Infrarot zwischen 4,4 und 4,8 μm vorhanden ist und ein scharf ausgeprägtes Maximum zwischen 4,5 und 4,6 μm aufweist. Diese spezifische Strahlungs-Signatur des Raketenabgases bildet die Grundlage für die Detektion durch den Warnsensor.

Die Signatur der Rakete wird somit im Warnsensor neben seiner Charakteristik als Punktbild eine schmale spektrale Bandbreite im mittleren Infrarot aufweisen.

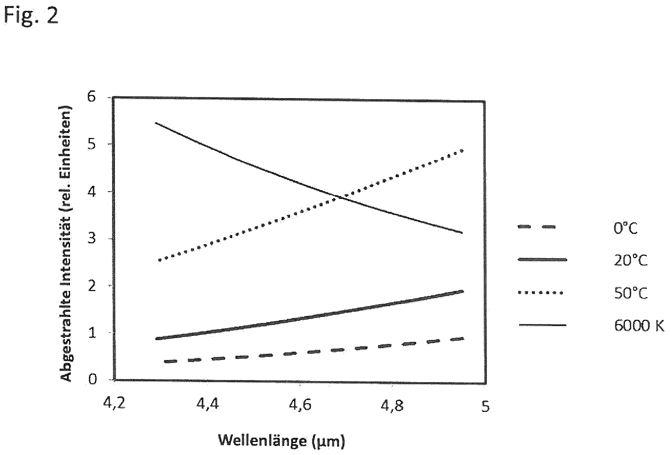

Zur Vermeidung von Falschzielen ist es notwendig, dass der Warnsensor zwischen Punktzielen, welche eine in Fig. 1 gezeigte schmale spektrale Bandbreite aufweisen und Punktzielen, die eine breitbandige Strahlungscharakteristik aufweisen, unterscheiden kann. Derartige breitbandige Punktziele können typischerweise als Sonnenreflexe an einer Scheibe auftreten. Zur Erläuterung zeigt Fig. 2 die spektrale Charakteristik von Schwarzkörperstrahlung für Hintergrundstrahlung bei 0°C, 20°C und 50°C Temperatur sowie für Sonnenstrahlung (6000K) im selben Frequenzbereich wie bei

Fig. 1. Füllt die Sonnenstrahlung das gesamte instantane Bildfeld (IFOV) eines Pixels des Detektors im Warnsensor, ist sie 20000-mal intensiver als in Fig. 2 gezeigt. Meist aber fällt ein Sonnenreflex auf ein Pixel, der nur in einem Teil des IFOVs entsteht, etwa an einer Scheibe, einem Sonnenkollektor, einer Pfütze. Dann ähnelt die spektrale Verteilung der Strahlung auf diesem Pixel einer Überlagerung aus der Schwarzkörper-Charakteristik bei der entsprechenden Außentemperatur und der Charakteristik von Sonnenstrahlung. Aus dem Verlauf der Kurven in Fig. 2 wird offensichtlich, dass derartige Sonnenreflexe eine breitbandige Strahlungscharakteristik aufweisen. Die vorliegende Erfindung ist in der Lage, auftretende Sonnenreflexe als Falschziel zu erkennen.

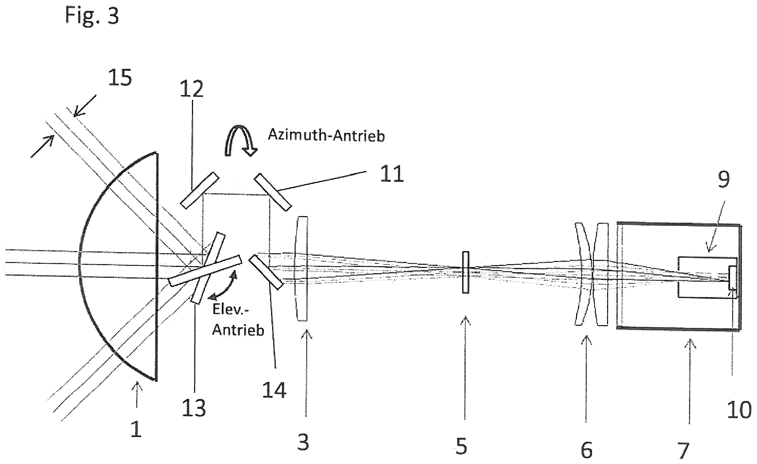

Fig. 3 zeigt den prinzipiellen Aufbau eines erfindungsgemäßen Confirmation-Sensors.

Der erfindungsgemäße Sensor umfasst einen optisch durchlässigen Dom 1 zum äußeren Abschluss des Sensors, ein Objektiv 3, ein im Strahlengang befindliches Bandpassfilter 5, eine Rückabbildungsoptik 6 sowie ein Dewar 7 mit darin befindlicher Kaltblende 9 (im Englischen auch als "Cold shield" bezeichnet) sowie ein Array-Detektor 10. Bei dem Detektor handelt es sich um einen bildgebenden Array-Detektor mit einem Bildfeld von z.B. 256*256 Pixeln. Der Detektor weist rückseitig z.B. eine CMOS-Signalverarbeitungselektronik auf. Das Innere des Dewars ist auf eine tiefe Temperatur, üblicherweise etwa minus 200 Grad Celsius gekühlt, um den Detektor für IR-Strahlung empfindlich zu machen. Gleichzeitig reduziert die tiefe Temperatur innerhalb des Dewars die Eigenstrahlung von Teilen des Sensors, insbesondere der Kaltblende 9. Der Durchmesser der Kaltblende 9 definiert über die Auslegung des Objektivs die Eintrittspupille 15 des Confirmation-Sensors, also den Durchmesser der auf den Detektor fallenden Strahlenbündels.

Das Sichtfeld (FoV) des Confirmation-Sensors kann z.B. vorteilhaft auf einen Winkelbereich von 3° * 3° ausgelegt sein, was groß genug ist für eine sichere Zielübergabe vom Warnsensor unter Berücksichtigung des Fehlers der Winkel, unter denen das Ziel detektiert wird sowie der dynamischen Effekte der Bewegungen von Ziel und Träger-Plattform. Die Einstellung der Größe des Sichtfeldes erfolgt insbesondere über die Wahl der Brennweite. Zur Zielverfolgung kann die Sichtlinie über Richtspiegel 11

- 14 in zwei Achsen ausgerichtet werden, wobei für jede Achse ein separater Antrieb zur Verfügung steht (Azimuthantrieb und Elevationsantrieb).

Der zugehörige IR-Warnsensor weist prinzipiell denselben Aufbau auf wie in der Fig. 3 für den Confirmation-Sensor gezeigte. Lediglich die Richtspiegel mit zugehörigem Antrieb in zwei Achsen werden nicht benötigt, da das Sichtfeld des IR-Warnsensors wesentlich größer ist als dasjenige des Confirmation-Sensors. Zur Erzielung eines möglichst großen Sichtfelds weist der IR-Warnsensor z.B. eine Fisheye oder Semi-Fisheye-Linse mit einer F-Zahl im Bereich von 1 bis 1,5 auf. Die Breite des Transmissionsbereichs $\Delta\lambda_{MWS}$ des Bandpassfilters im Warnsensor beträgt typischerweise 0,5 $\mu$m (die Indizes MWS und später CS verweisen generell auf den Warnsensor bzw. den Confirmation-Sensor). Die geringe F-Zahl setzt eine Untergrenze für die Breite des Transmissionsbereichs und die Flankensteilheit. Im Übrigen könnte als IR-Warnsensor vorteilhaft auch der Sensor nach der WO 2009/106037 A1 eingesetzt werden oder jeder bekannte IR-optische Raketenwarnsensor, der die beschriebene spektrale Signatur der Raketenabgase detektiert. Die Verwendung des Sensors gemäß WO 2009/106037 A1 hätte den zusätzlichen Vorteil, dass sich mit dem dort offenbarten Verfahren aus der spektralen Signatur der Rakete auch deren Entfernung ermitteln lässt.

Die optische Auslegung von IR-Warnsensor einerseits und Confirmation-Sensor andererseits erfolgt derart, dass die F-Zahl des Confirmation-Sensors mindestens 3 mal höher ist als die des Warnsensors.

Für die F-Zahl des Confirmations-Sensors wird z.B. F=5 gewählt. Vorteilhaft kann man die Größe der Eintrittspupillen in beiden Sensoren im Wesentlichen gleich groß wählen (insbesondere kann die Größe der Eintrittspupille des Confirmation-Sensors etwa 90% bis 120% der Größe der Eintrittspupille des IR-Warnsensors betragen). Bei gleicher Größe der Eintrittspupillen entspricht das Verhältnis der Brennweiten dem Verhältnis der F-Zahlen. Wählt man somit die F-Zahl des Confirmation-Sensors wesentlich größer als die des Warnsensors, ist auch die Brennweite des Confirmation-Sensors entsprechend größer. Bei im Wesentlichen gleicher Eintrittspupille und vergleichsweise hoher F-Zahl des Confirmation-Sensors reduziert sich im Vergleich zum IR-Warnsensor die Intensität, die der Confirmation-Sensor vom Hintergrund erfasst, während die Intensität einer Punktquelle gleich bleibt. In diesem Fall kann jedoch die spektrale Bandbreite $\Delta\lambda$ wesentlich verringert werden. Das Verhältnis der Breite der Transmissionsbereiche der in den beiden Sensoren verwendeten Bandpassfilters $\Delta\lambda_{CS}/\Delta\lambda_{MWS}$ wird bevorzugt kleiner als 0,2 gewählt. Die Breite des Transmissionsbereichs des Confirmation-Sensors $\Delta\lambda_{CS}$ kann vorteilhaft kleiner 100nm, z.B. zu 50nm gewählt werden.

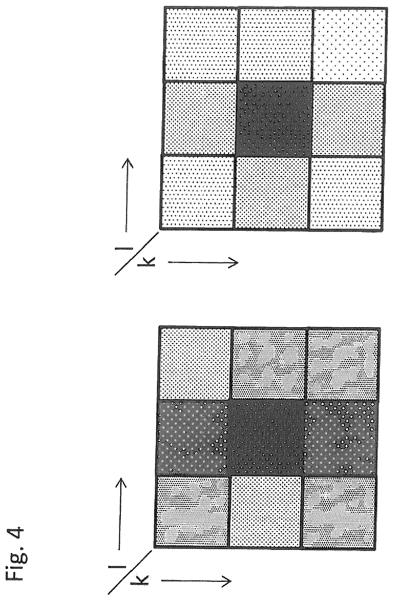

Die erfindungsgemäße Kombination aus einem weitwinkligen Warnsensor und dem Confirmation-Sensor, der mit den oben beschriebenen Merkmalen ausgelegt ist, liefert für die Signatur eines abgebildeten Punktobjekts in jedem der beiden Sensoren zwei Messgrößen, und zwar für die Intensität des Objekts selbst und für die Intensität der Hintergrundstrahlung. Diese Messgrößen werden aus der lokalen Umgebung des Punktbilds auf dem Detektor-Array des jeweiligen Sensors ermittelt. Hierzu zeigt Fig. 4 einen Ausschnitt aus dem Detektorarray des IR-Warnsensors (links) und des Confirmation-Sensors (rechts) für dasselbe Ziel. Dargestellt ist jeweils die 3x3 Pixel-Umgebung um ein Punktbild, das auf dem zentralen Pixel der 3x3 Matrix abgebildet ist. Die Berechnung der vier Messgrößen kann leicht auf größere lokale Umgebungen des Detektor-Arrays erweitert werden und auch auf Punktbilder mit beliebigem Phasenversatz relativ zum Pixelraster. In Fig. 4 ist der Grad der Graufüllung eines Pixels ein Maß für die Größe des Sensorsignals, d.h. der Intensität der pro Pixel empfangenen Strahlung. Man erkennt aus dieser qualitativen Darstellung in Fig. 4, dass der Kontrast des zentralen Punktbilds gegenüber seiner Umgebung beim Confirmation-Sensor wesentlich stärker ausgeprägt als beim IR-Warnsensor.

Die im folgenden eingeführte Größe $S_{k,l}$ bezeichnet das Ausgangssignal des Sensors für das Pixel in Zeile k (k=1,2,3) und Spalte I (I=1,2,3) der in Fig. 4 gezeigten lokalen Detektormatrix.

Das Sensorsignal, welches der durchschnittlichen Hintergrund-Intensität $S_{BG}$ entspricht, und das Sensorsignal, welches der Punktbild-Intensität $S_{PS}$ entspricht, ergeben sich damit zu

$$S_{BG} = \frac{1}{8} \cdot \left( S_{2,1} + S_{2,3} + \sum_l S_{1,l} + \sum_l S_{3,l} \right)$$

$$S_{PS} = S_{2,2} - S_{BG}$$

Aus diesen Messgrößen $S_{BG}$ und $S_{PS}$ errechnet sich der Kontrast, mit dem die Punktquelle im Detektorbild erfasst wird, zu

$$K = \frac{S_{PS} + S_{BG}}{S_{BG}}$$

Im folgenden Rechenbeispiel wird gezeigt, wie aus dem Kontrast $K_{MWS}$, der im Warnsensor gemessen wird, der erwartete Kontrastwert $K_{CS}$ ableiten lässt, mit dem sich das Objekt im Confirmation-Sensor darstellt, wenn es sich um eine Raketensignatur (also eine spektral schmalbandige Punktquelle) handelt. Weiter wird gezeigt, dass sich der Kontrast anderer Objektsignaturen (spektral breitbandige Punktquellen und räumlich ausgedehnte Quellen) von dem der Raketensignatur so unterscheidet, dass eine Raketensignatur sicher erkannt werden kann.

**Beispiel**

Die Indizes MWS und CS beziehen sich im Folgenden wieder auf den Warnsensor bzw den Confirmation-Sensor, die Indizes BG und PS verweisen auf den Hintergrund bzw auf ein Punktbild. Weitere Bezeichnungen:

S     - Sensor Ausgangs-Signal für ein einzelnes Pixel

K     - Kontrast eines Pixels relativ zu seiner lokalen Umgebung

F#     - F-Zahl

P     - Pupillen-Durchmesser

R     - spektraler Response

L     - spektrale Radianz

BB     - Schwarzer Körper (Black Body)

$\Delta\lambda$     - volle Halbwertsbreite des Transmissionsbereichs des Bandpassfilters.

Zunächst wird berechnet, mit welcher Intensität der Confirmation-Sensor die Hintergrundstrahlung relativ zum IR-Warnsensor widergibt:

$$\frac{S_{BG,CS}}{S_{BG,MWS}} = \left(\frac{F\#_{CS}}{F\#_{MWS}}\right)^{-2} \cdot \frac{\int R_{CS}(\lambda) \cdot L_{BG}(\lambda) \cdot d\lambda}{\int R_{MWS}(\lambda) \cdot L_{BG}(\lambda) \cdot d\lambda} \approx \left(\frac{F\#_{CS}}{F\#_{MWS}}\right)^{-2} \cdot \frac{\Delta\lambda_{CS}}{\Delta\lambda_{MWS}} \cdot \frac{\langle R_{CS} \cdot L_{BG}\rangle}{\langle R_{MWS} \cdot L_{BG}\rangle}$$

Unter der Annahme, dass die Hintergrundstrahlung innerhalb des betrachteten schmalen Spektralbereichs nicht stark variiert, können die Mittelwerte des Produkts R·L für beide Integrationsbereiche als näherungsweise gleich betrachtet werden. Darüber hinaus werden die folgenden typischen Werte gewählt: Verhältnis der F-Zahlen sei 5:1, Verhältnis $\Delta\lambda_{CS}/\Delta\lambda_{MWS}$ der spektralen Halbwertsbreiten sei 1:7. Man erhält somit:

$$S_{BG,CS} = \frac{1}{25} \cdot \frac{1}{7} \cdot S_{BG,MWS} = 0.006 \cdot S_{BG,MWS}$$

Im nächsten Schritt wird das Verhältnis der Punktbild-Intensitäten für beide Sensoren ermittelt:

$$\frac{S_{PS,CS}}{S_{PS,MWS}} = \left(\frac{P_{CS}}{P_{MWS}}\right)^{2} \cdot \frac{\int R_{CS}(\lambda) \cdot L_{PS}(\lambda) \cdot d\lambda}{\int R_{MWS}(\lambda) \cdot L_{PS}(\lambda) \cdot d\lambda}$$

Eine schmalbandige Quelle wird durch das Filter relativ weniger gedämpft als eine breitbandige, wenn der Transmissionsbereich des Filters mit dem Maximum der spektralen Signatur zusammenfällt. Im Fall der spektralen Charakteristik von Raketensignaturen ergeben Simulationsrechnungen und Messungen folgendes Ergebnis:

$$\frac{S_{PS,CS}}{S_{PS,MWS}} = \left(\frac{P_{CS}}{P_{MWS}}\right)^{2} \cdot \begin{cases} 0.14 & \text{für Punktquellen mit BB Charakteristik} \\ 0.33 & \text{für Punktquellen mit } CO_2 \text{ Charakteristik} \end{cases}$$

Damit kann aus dem vom Warnsensor gemessenen Punktbild-Kontrast $K_{MWS}$ abgeleitet werden, welche Kontrastwerte $K_{CS}$ im Bild des Confirmation-Sensors erwartet werden können, wenn das zugehörige Objekt eine Raketensignatur abstrahlt. In der folgenden Berechnung wird das Verhältnis der Pupillengrößen der beiden Sensoren gemäß einer vorteilhaften Ausführung zu 1 gesetzt, wobei wie die Rechnung zeigt, auch ein anderes Verhältnis möglich ist, ohne den erfindungsgemäßen Effekt zu beeinträchtigen:

$$K_{CS} = \frac{S_{PS,CS} + S_{BG,CS}}{S_{BG,CS}} = \frac{0.33 \cdot S_{PS,MWS}}{0.006 \cdot S_{BG,MWS}} + 1 = 55 \cdot (K_{MWS} - 1) + 1$$

Für eine Punktquelle mit Schwarzkörper-Charakteristik erhalten wir entsprechend

$$K_{CS} = \frac{S_{PS,CS} + S_{BG,CS}}{S_{BG,CS}} = \frac{0.14 \cdot S_{PS,MWS}}{0.006 \cdot S_{BG,MWS}} + 1 = 23.3 \cdot (K_{MWS} - 1) + 1$$

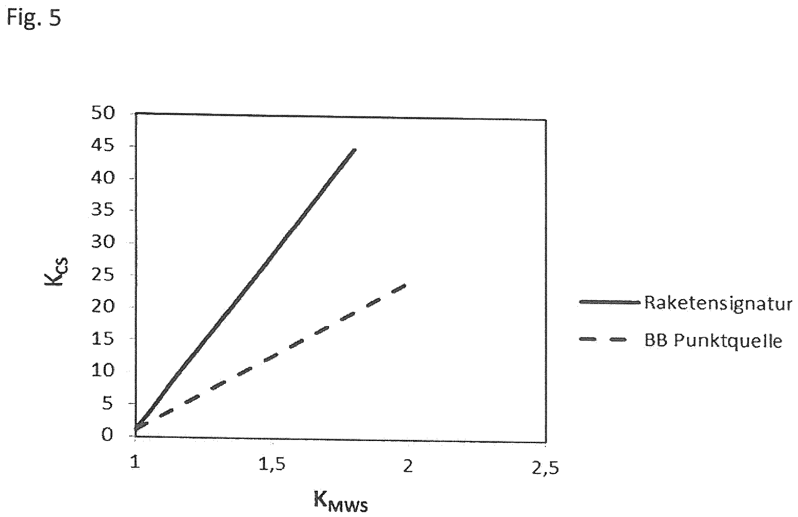

Der so berechnete Zusammenhang zwischen dem Punktbildkontrast in beiden hier untersuchten Sensoren ist in Fig. 5 dargestellt, wobei die durchgezogene Linie die Raketensignatur betrifft und die gestrichelte Linie eine spektral breitbandige Punktquelle ("BB-Punktquelle"). Man erkennt, dass bereits Punktbilder, die vom Warnsensor mit kleinem Bild-Kontrast unter 1,1 wiedergegeben werden, sich im Confirmation-Sensor signifikant hinsichtlich des Bildkontrasts unterscheiden, abhängig von der spektralen Charakteristik.

Als konkretes Beispiel wird der Fall eines Punktbildkontrasts von 1,1 im Warnsensor angenommen. Dies ist ein typischer Wert, bei dem mit einem IR-Warnsensor noch eine Detektion erwartet werden kann. Für Raketensignaturen (schmalbandige Punktquelle) ist nach den oben angegebenen Formeln einen Kontrast von 6,5 und für breitbandige Punktquellen einen Kontrast von 3,33 zu erwarten. Setzt man als Grenzwert zur Unterscheidung zwischen Raketensignaturen und anderen Objektsignaturen zum Beispiel den Mittelwert der beiden genannten Werte (ca. 5,0), bleibt immer noch ein ausreichender Spielraum für real auftretende Schwankungen der Kontrastwerte, wie sie etwa durch Rauschen und Streuung realer Objektsignaturen zu erwarten sind.

Eine räumlich ausgedehnte Quelle wird durch den Confirmation-Sensor wegen der vergleichsweise langen Brennweite auf mehreren Pixeln abgebildet, wodurch die Intensität auf diese Pixel verteilt wird, während die Intensität im Warnsensor auf einem Pixel konzentriert ist. Damit nimmt der Kontrast im Bild ab, so dass derartige Objektsignaturen im unteren Kontrastbereich im Bereich der Werte zwischen 1 und 2 erwartet werden.

Als Resultat aus den vorhergehenden Erläuterungen ergibt sich, dass sich Punktquellen im Ausgangssignal des Confirmation-Sensors deutlich stärker vom Hintergrund abheben als im Warnsensor. Dabei werden Punktquellen mit geringer spektraler Bandbreite (die der Raketensignatur entsprechen) im Bild des Confirmation-Sensors mit einem deutlich höheren Kontrast wiedergegeben als Punktobjekte mit spektral breitbandiger Charakteristik oder räumlich ausgedehnte Objekte.

Der Ablauf der Detektion mittels der erfindungsgemäßen Kombination von IR-Warnsensor und Confirmation-Sensor ist nun wie folgt:

- Detektion einer Punktquelle im Warnsensor,
- Einweisung des Confirmation-Sensors auf das vom Warnsensor detektierte Ziel durch Übertragung der Richtungsinformation vom IR-Warnsensor zum Confirmation-Sensor. Dabei kann vorteilhaft auch bereits die Kontrastinformation des Ziels übergeben werden. Die Ziel-Übergabe erfolgt schnell und zuverlässig, da sich die Zielsignatur, die der Warnsensor im Hintergrund-Clutter entdeckt hat, im Confirmation-Sensor klar vom Hintergrund abhebt, wenn es sich tatsächlich um eine Punktquelle handelt. Ein einfacher Schwellwert-Tracker ist ausreichend, um im Bildfeld des Confirmation-Sensors das Ziel zu verfolgen.
- Ausrichtung der Sichtlinie des Confirmation-Sensors auf das vom Warnsensor detektierte Ziel;
- Detektion des Ziels im Bildfeld des Confirmation-Sensors;
- Bestätigung der Raketensignatur auf der Basis der Kontrastwerte des Ziels im IR-Warnsensor und im Confirmation-Sensor. Dabei wird aus dem Kontrast des Objektbilds im IR-Warnsensor (basierend auf den bekannten optischen Eigenschaften der beiden Sensoren wie oben erläutert) ein Schwellwert für den Kontrast des

Objektbilds im Confirmation-Sensor abgeleitet. Wird dieser Schwellwert überschritten, liegt eine Raketensignatur vor. Als Schwellwert für die Bestätigung der Raketensignatur kann vorteilhaft das geometrische Mittel der folgenden Werte verwendet werden:

- der aufgrund des Kontrastwertes im Warnsensor für eine Raketensignatur im Confirmation-Sensor zu erwartete Kontrastwert,
- der aufgrund des Kontrastwertes im Warnsensor für eine Punktquelle mit Schwarzkörper-Charakteristik im Confirmation-Sensor zu erwartende Kontrastwert.

Wegen der einfach zu ermittelnden Kriterien zur Signatur-Bestätigung lassen sich alle Schritte in einem Zeitraum von weniger als einer Sekunde durchführen.

**Patentansprüche**

1. IR-optisches System zur Raketenwarnung, umfassend einen IR-Warnsensor zur Detektion von Raketen aufgrund der IR-Signatur ihrer Abgaswolke im mittleren Infrarot, einen zweiten IR-Sensor, der für die gleiche IR-Signatur der Abgaswolke empfindlich ist, wobei die F-Zahl des zweiten IR-Sensors mindestens drei Mal höher ist als die des IR-Warnsensors und wobei der zweite Sensor ein Bandpassfilter (5) umfasst, dessen Transmissionsbereich wesentlich schmalbandiger ist als derjenige des IR-Warnsensors, und Mittel zur Bestätigung der Raketensignatur durch Auswertung der Kontrastwerte des Ziels im IR-Warnsensor und im zweiten IR-Sensor, wobei die Bestätigung der Raketensignatur dadurch erfolgt, dass aus dem Kontrast des Objektbilds im IR-Warnsensor ein Schwellwert für den Kontrast des Objektbilds im zweiten IR-Sensor erzeugt wird, der indikativ für das Vorliegen einer Raketensignatur ist.

2. IR-optisches System nach Anspruch 1, **dadurch gekennzeichnet, dass** die F-Zahl des zweiten IR-Sensors größer oder gleich 5 ist.

3. IR-optisches System nach Anspruch 1 oder 2, **dadurch gekennzeichnet, dass** die Eintrittspupillen von IR-Warnsensor und zweitem IR-Sensor im Wesentlichen gleich sind.

4. IR-optisches System nach einem der vorangehenden Ansprüche, **dadurch gekennzeichnet, dass** sowohl der IR-Warnsensor als auch der zweite IR-Sensor ein Bandpassfilter (5) aufweisen, wobei das Verhältnis der Breite der Transmissionsbereiche von zweiten IR-Sensor zum IR-Warnsensor kleiner als 0,2 ist.

**5.** IR-optisches System nach Anspruch 4, **dadurch gekennzeichnet, dass** die Breite des Transmissionsbereichs des zweiten IR-Sensors kleiner 100nm ist und vorteilhaft 50nm beträgt.

**6.** IR-optisches System nach Anspruch 4 oder 5, **dadurch gekennzeichnet, dass** das Bandpassfilter des zweiten IR-Sensors elektrisch durchstimmbar ist.

**7.** IR-optisches System nach einem der vorangehenden Ansprüche, **dadurch gekennzeichnet, dass** die Sichtlinie des zweiten IR-Sensors in zwei Achsen ausgerichtet werden kann.

**8.** IR-optisches System nach einem der vorangehenden Ansprüche, **dadurch gekennzeichnet, dass** IR-Warnsensor und zweiter IR-Sensor jeweils einen Array-Detektor (10) mit einer Mehrzahl von Pixeln aufweisen, wobei die Array-Detektoren jeweils eingerichtet sind, den Kontrastwert eines als Punktziel auf dem Detektor-Array abgebildeten Objekts zu der abgebildeten lokalen Umgebung zu ermitteln.

**9.** Verfahren zur Detektion von Raketen unter Einsatz des IR-optischen Systems, nach einem der vorangehenden Ansprüche, mit folgenden Schritten:

- Detektion eines Ziels im IR-Warnsensor,
- Einweisung zweiten IR-Sensors auf das vom IR-Warnsensor detektierte Ziel,
- Ausrichtung des zweiten IR-Sensors auf das vom IR-Warnsensor detektierte Ziel,
- Detektion des Ziels durch den zweiten IR-Sensor,
- Bestätigung der Raketensignatur durch Auswertung der Kontrastwerte des Ziels im IR-Warnsensor und im zweiten IR-Sensor, wobei die Bestätigung der Raketensignatur dadurch erfolgt, dass aus dem Kontrast des Objektbilds im IR-Warnsensor ein Schwellwert für den Kontrast des Objektbilds im zweiten IR-Sensor erzeugt wird, der indikativ für das Vorliegen einer Raketensignatur ist.

**10.** Verfahren nach Anspruch 9, **dadurch gekennzeichnet, dass** der Schwellwert als arithmetisches Mittel aus den beiden folgenden Werten ermittelt wird:

- der aufgrund des Kontrastwertes im IR- Warnsensor für eine schmalbandige Punktquelle zu erwartete Kontrastwert im zweiten IR-Sensor,
- der aufgrund des Kontrastwertes im IR- Warnsensor für eine Punktquelle mit Schwarzkörper-Charakteristik zu erwartende Kontrastwert im zweiten IR-Sensor.

**Claims**

**1.** IR optical system for missile warning, comprising an IR warning sensor for detecting missiles based on the IR signature of the exhaust cloud thereof in the mid-infrared, a second IR sensor which is sensitive to the same IR signature of the exhaust cloud, wherein the F-number of the second IR sensor is at least three times higher than that of the IR warning sensor and wherein the second sensor comprises a band-pass filter (5), the transmission range of which is significantly narrower than that of the IR warning sensor, and means for confirming the missile signature by evaluating the contrast values of the target in the IR warning sensor and in the second IR sensor, wherein the missile signature is confirmed by a threshold value for the contrast of the object image in the second IR sensor being generated from the contrast of the object image in the IR warning sensor, which threshold value is indicative of the presence of a missile signature.

**2.** IR optical system according to claim 1, **characterized in that** the F-number of the second IR sensor is greater than or equal to 5.

**3.** IR optical system according to either claim 1 or claim 2, **characterized in that** the entrance pupils of the IR warning sensor and the second IR sensor are substantially the same.

**4.** IR optical system according to any of the preceding claims, **characterized in that** the IR warning sensor and the second IR sensor have a band-pass filter (5), the ratio of the width of the transmission ranges of the second IR sensor to the IR warning sensor being less than 0.2.

**5.** IR optical system according to claim 4, **characterized in that** the width of the transmission range of the second IR sensor is less than 100 nm and advantageously 50 nm.

6. IR optical system according to either claim 4 or claim 5, **characterized in that** the band-pass filter of the second IR sensor is electrically variable.

7. IR optical system according to any of the preceding claims, **characterized in that** the line of sight of the second IR sensor can be oriented in two axes.

8. IR optical system according to any of the preceding claims, **characterized in that** the IR warning sensor and the second IR sensor each have an array detector (10) having a plurality of pixels, the array detectors each being designed to determine the contrast value of an object imaged as a point target on the detector array with respect to the local surroundings.

9. Method for detecting missiles using the IR optical system according to any of the preceding claims, comprising the following steps:

- detecting a target in the IR warning sensor,
- briefing the second IR sensor on the target detected by the IR warning sensor,
- orienting the second IR sensor to the target detected by the IR warning sensor,
- detecting the target by means of the second IR sensor,
- confirming the missile signature by evaluating the contrast values of the target in the IR warning sensor and in the second IR sensor, wherein the missile signature is confirmed by a threshold value for the contrast of the object image in the second IR sensor being generated from the contrast of the object image in the IR warning sensor, which threshold value is indicative of the presence of a missile signature.

10. Method according to claim 9, **characterized in that** the threshold value is determined as an arithmetic mean from the two following values;

- the contrast value which is to be expected in the second IR sensor for a narrowband point source, based on the contrast value in the IR warning sensor,
- the contrast value to be expected in the second IR sensor for a point source having black body characteristics, based on the contrast value in the IR warning sensor.

**Revendications**

1. Système optique IR destiné à l'alerte missile, comprenant un capteur d'alerte IR destiné à la détection de missiles sur la base de la signature IR de leur nuage de gaz d'échappement dans l'infrarouge moyen, un second capteur IR qui est sensible à la même signature IR du nuage de gaz d'échappement, le nombre F du second capteur IR étant au moins trois fois supérieur à celui du capteur d'alerte IR et le second capteur comprenant un filtre passe-bande (5) dont la plage de transmission est sensiblement plus étroite que celle dudit capteur d'alerte IR, et des moyens permettant de confirmer la signature de missile en évaluant les valeurs de contraste de la cible dans le capteur d'alerte IR et dans le second capteur IR, la signature de missile étant confirmée en ce qu'une valeur seuil pour le contraste de l'image d'objet dans le second capteur IR est générée à partir du contraste de l'image d'objet dans le capteur d'alerte IR, laquelle valeur seuil indiquant la présence d'une signature de missile.

2. Système optique IR selon la revendication 1, **caractérisé en ce que** le nombre F du second capteur IR est supérieur ou égal à 5.

3. Système optique IR selon la revendication 1 ou 2, **caractérisé en ce que** les pupilles d'entrée du capteur d'alerte IR et du second capteur IR sont sensiblement égales.

4. Système optique IR selon l'une des revendications précédentes, **caractérisé en ce qu'**aussi bien le capteur d'alerte IR que le second capteur IR présentent un filtre passe-bande (5), le rapport de la largeur des plages de transmission du second capteur IR au capteur d'alerte IR étant inférieur à 0,2.

5. Système optique IR selon la revendication 4, **caractérisé en ce que** la largeur de la plage de transmission du second capteur IR est inférieure à 100 nm et est préférablement de 50 nm.

**6.** Système optique IR selon la revendication 4 ou 5, **caractérisé en ce que** le filtre passe-bande du second capteur IR est accordable électriquement.

**7.** Système optique IR selon l'une des revendications précédentes, **caractérisé en ce que** la ligne de visée du second capteur IR peut être alignée selon deux axes.

**8.** Système optique IR selon l'une des revendications précédentes, **caractérisé en ce que** le capteur d'alerte IR et le second capteur IR présentent respectivement un détecteur matriciel (10) comportant une pluralité de pixels, les détecteurs matriciels étant respectivement configurés pour déterminer la valeur de contraste d'un objet affiché comme cible ponctuelle sur le détecteur matriciel par rapport à l'environnement local affiché.

**9.** Procédé destiné à la détection de missiles à l'aide du système optique IR selon l'une des revendications précédentes, comportant les étapes suivantes :

- détection d'une cible dans le capteur d'alerte IR,
- placement du second capteur IR sur la cible détectée par le capteur d'alerte IR,
- alignement du second capteur IR sur la cible détectée par le capteur d'alerte IR,
- détection de la cible par le second capteur IR,
- confirmation de la signature de missile en évaluant les valeurs de contraste de la cible dans le capteur d'alerte IR et dans le second capteur IR, la signature de missile étant confirmée en ce qu'une valeur seuil pour le contraste de l'image d'objet dans le second capteur IR est générée à partir du contraste de l'image d'objet dans le capteur d'alerte IR, laquelle valeur seuil indiquant la présence d'une signature de missile.

**10.** Procédé selon la revendication 9, **caractérisé en ce que** la valeur seuil est déterminée comme moyenne arithmétique à partir des deux valeurs suivantes ;

- la valeur de contraste à attendre dans le second capteur IR sur la base de la valeur de contraste dans le capteur d'alerte IR pour une source ponctuelle à bande étroite,
- la valeur de contraste à attendre dans le second capteur IR sur la base de la valeur de contraste dans le capteur d'alerte IR pour une source ponctuelle comportant des caractéristiques de corps noir.

Fig. 1

Fig. 2

Fig. 3

Azimuth-Antrieb

Elev.-Antrieb

15
12
11
9
1
13
14
3
5
6
7
10

EP 3 333 557 B1

13

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20110084195 A1
- US 8184272 B2

- WO 2009106037 A1